# EUROPEAN PATENT SPECIFICATION

(11) **EP 1 888 949 B1**
(45) Date of publication and mention of the grant of the patent: **29.04.2009**
(21) Application number: 06754150.8
(22) Date of filing: 06.06.2006
(51) Int. Cl.: F16J 15/08

(54) **GASKET**
DICHTUNG
JOINT D'ETANCHEITE

(30) Priority: 06.06.2005 DE 102005025942
(43) Date of publication of application: 20.02.2008
(73) Proprietor: REINZ-Dichtungs-GmbH, 89233 Neu-Ulm (DE)
(72) Inventor: HÖHE, Kurt, 89129 Langenau (DE)
(74) Representative: Gleiter, Hermann
(86) International application number: PCT/EP2006/005378
(87) International publication number: WO 2006/131309

(56) References cited:
- EP-A- 1 298 364
- DE-A- 10 248 395

## Description

The invention relates to a gasket which has at least one metal layer in which at least two through openings are formed, in each case at least one bead being arranged around the through openings.

To increase and safeguard the sealing effect of such a metal gasket over a lengthy period of time, it is usual to form a bead around the different through openings by corresponding embossing of at least one of the layers of such a gasket, this bead generally completely surrounding the through opening. It is also possible to combine openings for similar media within one bead.

Above all in cylinder head gaskets but also in manifold gaskets, the beads surrounding the through openings are especially very severely stressed by constant change of pressure and temperature. They can however only fulfil their function as long as a certain degree of elasticity is preserved in the bead region but this is generally not possible without additional aids for preventing complete plastic deformation. Deformation-limiting devices for the beads - at least for the combustion gas openings, partially also at other openings - are usually used for this purpose. Such deformation-limiting devices are known in the most varied embodiments and are usually also referred to as "stoppers". Thus deformation-limiting devices can be realised by folding over a metal layer, in the form of a bulge, by a separate metal ring, by a so-called hard coating or also, as disclosed in WO 01/96768 A1, by introducing a wave shape. A meander-like stopper, such as is disclosed in EP 1 298 364 A2 is also possible.

In all these cases, it is consequently in the prior art the case that for a complete seal, at least around the combustion gas opening, a specifically selected combination of bead and associated stopper must be employed. Generally the stopper is formed on the side of the opening and the bead adjoins it on the side remote from the through opening. However converse arrangements are also possible. In each case there arises from the specific bead/stopper combination a certain need for space, since the bead always has to be spaced apart from the stopper.

In recent times there have increasingly been motor developments in which very narrow cylinder spacings are realised, such that it is in many cases difficult to find sufficient space in the web region for a bead/stopper combination. On the other hand, in these motor structures a high permanent sealing effect is required such that it is not possible to dispense with a stopper.

Proceeding therefrom, the object of the present invention is now to make available a metal gasket on which, in the web region - generally a narrow region between two through openings, especially the narrow passage area between two combustion gas openings - a structure which is as space-saving as possible comprising the stopper and bead is achieved.

This object is accomplished by the characterising features of patent claim 1. The subordinate claims list advantageous developments.

Thus it is proposed according to the invention that the beads surrounding the adjacent through openings are so brought together in the web area that at least one undulating or meander-like profiling is formed in the web area between the bead limbs belonging to the two through openings, which profiling forms a stopper. To do so, the bead and the stopper may be arranged in the same layer or they may be arranged in directly adjoining layers with the bead in one layer and the stopper in the adjoining layer. In this case, in preferred embodiments, the stopper may be arranged between the limbs of the bead in a layer opposite to the top of the bead. However, in another preferred embodiment, the stopper and the beads are arranged in the same layer.

Under the term "bead" are understood below, as is usual in the prior art, full and half beads. In the sense of this application, the term also includes a web bead as defined below. A full bead has a first bead limb, a bead top and a second bead limb; it does not necessarily have to be symmetrical. A half bead, on the other hand, has only one bead limb and always leads to a height off-set. A web bead in the sense of this invention is formed in the web area when the two full beads of the adjacent through openings are led into the web area between two through openings in such a way that the two limbs of the two beads remote from the through opening merge into one another outside the web area without entering the web area, whilst the two members of the two beads facing the through opening extend inside the web area in such a way that a bead top is formed between them in the web area. Thus in the web area the web bead has two bead limbs and a bead top. The transition region between web area and area outside the web shows three pairs of bead limbs each pair linked by a bead top. At the intersection, the bead tops coalesce to a joint top and each of the bead limb merges with its next neighbour to which it had not been linked by a bead top.

The nub of the invention is thus that, in the web area, the stopper is embedded between the at least two bead limbs and the number of peaks and troughs - also referred to hereinafter as raised portions in each case - of the undulating or meander-like profiling forming the stopper is smaller in the web area than the sum of the raised portions of the undulating or meander-like profilings outside the web area which belong to the two through openings separated by the respective web area. In order to provide a sufficient stopper behaviour, the undulating profiling shows at least 1, preferably 1.5, most preferably 2 periods of a wave in the web area. For the meander-like profiling, half a period is sufficient, as long as the profiling trails with at least three consecutive meanders through the web area.

Counting of the raised portions takes place predominantly radially from the through opening outwards. Due to this structure it is now possible for a bead/stopper combination to be realised in the web area even if this area is very small as a result of the spacings between the openings. It is also advantageous that manufacturing such a bead/stopper combination is very cost-effective, since the stopper can be produced at the same time as the bead is embossed for the embodiment with the bead and the stopper in the same layer.

In the invention it is preferred if, even outside the web area, the deformation of the bead (full bead or half bead) surrounding the through opening is limited by means of an adjacent undulating or meander-like profiling which does not abut against the through opening. In this case, the bead/stopper combination can be achieved in that the undulating or meander-like profilings of adjacent through openings are brought together in the web area between the beads (web beads, half beads or full beads) surrounding the through opening and are adjoined by at least one bead limb towards each through opening. It is sufficient here for respectively only that part of the especially undulating profile of each through opening to be brought together in the web area, which is required to form a sufficient stopper effect between the at least two bead limbs. In addition to such partial bringing- together of the two profilings, in which a part of the respective profiling ends in a random way before the web area, it is also possible for an undulating or meander-like profiling to be brought together with the undulating or meander-like profiling of the respectively other through opening in such a way that one profiling runs out completely.

Alternatively, however, it is also possible for the undulating or meander-like profiling to extend outside the web area on the side of the bead facing the through opening. In this case, the undulating or meander-like profiling of the web area breaks off completely outside the web area in one embodiment. In the web area, an undulating or meander-like profiling is formed between the limbs of the bead. However in the case of a stopper which has a large number of raised portions outside the web area, an embodiment is also possible in which, in addition to the profiling between the bead limbs in the web area, a severely reduced number of raised portions is continued also in the web area at the side of the bead facing the through opening, so that this profiling is considerably reduced, but does not completely break off.

In the case of the gasket according to the invention it is furthermore preferred for the bead surrounding the through opening outside the web area to be a full bead and for the undulating or meander-like profiling in the web area to be formed between the limbs of the web bead which is being formed. Alternatively, the bead can also be a half-bead and the undulating or meander-like profiling is then arranged in the web area between the limbs of the two half beads. In principle it is also possible for the profiling in the web area to be flanked on both sides by the two limbs of a full bead. However, more space is necessary for this than for the above-mentioned solutions.

The individual raised portions of the profiling (undulating or meander-like shape) can also be shaped trapezoid, either by flattening the wave crests and troughs in the tool or by flattening the raised portions in the gasket layer itself. Further possible variations which can influence the elastic/plastic behaviour of the beads arise in particular in the case of the undulating profiling if the profile height (amplitude) and/or the spacings between the wave crests and/or troughs and/or the width of a wave and/or the curvature of the wave surfaces are varied inside the profiling. In the case of the meander-like profiling, the depths, widths and radii of the arcs can vary as well. A profiling can also be plastically deformed in regions, such that material taperings are formed in particular at the flanks of the profiling. Naturally, embodiments in which at least one of the above-mentioned parameters alters around or in relation to its distance to a through opening are just as possible as a different design in general or in respect of at least one of these parameters at different through openings.

In addition to the sealing of combustion gas openings, especially in the case of cylinder head gaskets and manifold gaskets, the invention also includes embodiments in which the above-described bead/stopper combination for the web area is also applied to other areas of a metal gasket, in which a high sealing function is required with a predetermined small amount of available space. This can be the case for example with cylinder head gaskets in the often narrow transition region of the actual crankcase seal, for sealing a flanged component (e.g. chain case or a case for a toothed-belt drive). The bead/stopper combination according to the invention can here be used for effectively sealing the crankcase area from the case.

The inventive bead/stopper combination can be formed in the most varied metal materials, especially steel materials, a particularly high elasticity and consequently an improvement of the sealing effect over a long period of time being attainable with spring steel. In addition to spring steel, the bead/stopper combination can also be formed from a cold-deformable steel which hardens during tempering.

The gasket according to the invention can naturally be so designed that it comprises one or more metal layers. It is essential in each case that at least one metal layer has the above-described inventive bead/stopper combination in the web area.

As is known from the state of the art, the gasket layer(s) may be coated partially or completely on one or both of their surfaces. While combustion gas holes are generally sealed by a bead, other holes may not be encircled by a bead or several holes of the same kind may be sealed by a joint bead.

The invention is described in greater detail below with the aid of Figs. 1 to 10. The figures represent, merely by way of example, some preferred embodiments of the invention. However, the invention is not limited to the examples shown.
Fig. 1 shows a metal gasket according to the invention, in plan view.
Fig. 2 shows, in section, the formation of the inventive bead/stopper combination in the web area.
Fig. 3 shows, in a perspective view, the formation of the bead/stopper combination in the web area.
Fig. 4 shows a second embodiment of a gasket according to the invention, in plan view.
Fig. 5 shows, in a perspective view, the formation of the bead/stopper combination in the web area according to the second embodiment.
Fig. 6 shows, in section, the formation of the inventive bead/stopper combination in the web area of the second embodiment.
Fig. 7 shows a plan view of a further embodiment of a metal gasket according to the invention.
Fig. 8 shows a perspective view of a metal gasket according to the invention corresponding to the embodiment of Fig. 7.
Fig. 9 shows a plan view of a further embodiment of a metal gasket according to the invention.
Fig. 10 shows a perspective view of a metal gasket according to the invention corresponding to the embodiment of Fig. 9.
Fig. 11 shows a perspective view of a further embodiment of a metal gasket according to the invention.
Fig. 12 shows a perspective view of a further embodiment of a metal gasket according to the invention.

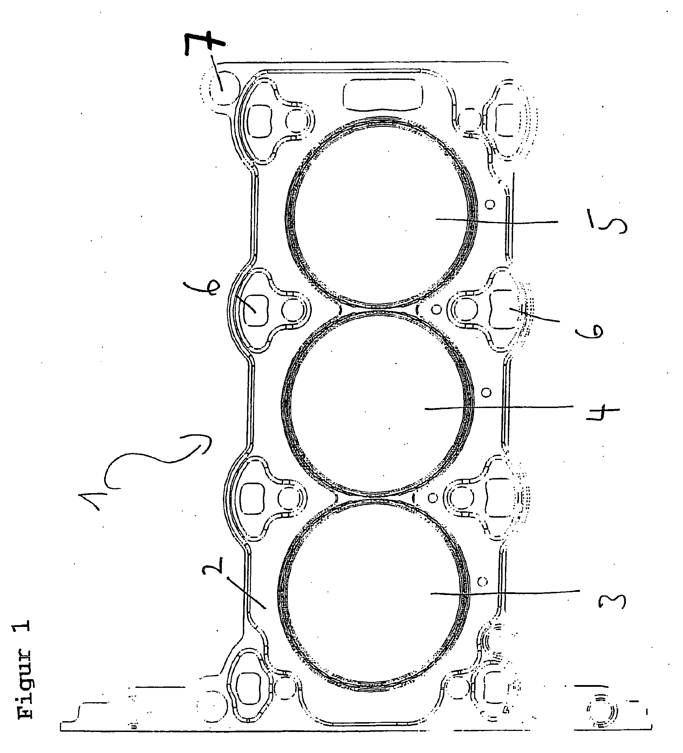

Fig. 1 shows a metal gasket 1 according to the invention through the example of a cylinder head gasket which has three combustion gas openings 3, 4 and 5. The metal gasket is provided with additional through openings for fluids 6 and screw holes 7.

The embodiment according to Fig. 1 shows a metal cylinder head gasket which has been formed from a metal layer 2. However the invention also includes all the other embodiments, i.e. embodiments in which more than one metal layer is used to form the metal gasket. What is essential in all cases is that the bead/stopper combination according to the invention is used in at least one layer for the web area. However, bead and stopper may be provided in different adjacent layers of a multilayer gasket.

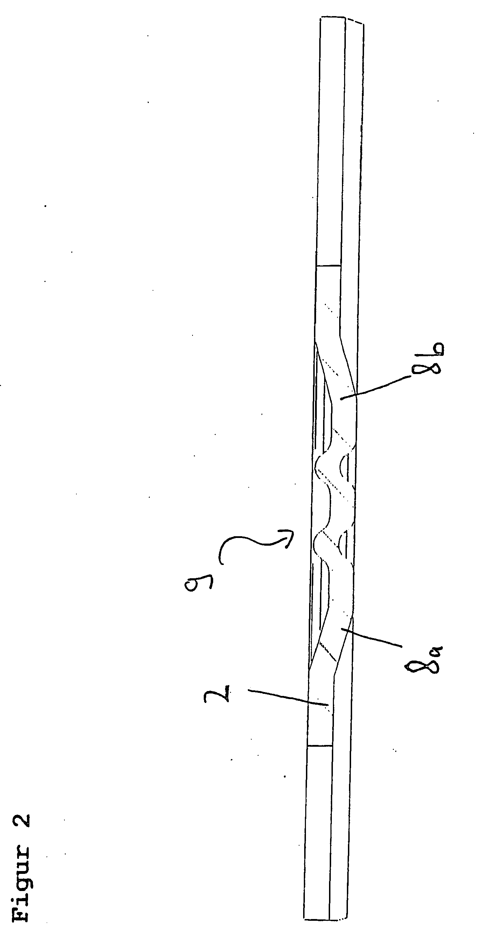

The detailed design of the bead/stopper combination of the metal gasket according to Fig. 1 is shown in Fig. 2.

In the metal layer 2, the undulating profiling 9 is formed in the web area, between the two bead limbs 8a and 8b. In the exemplary embodiment according to Fig. 2, the undulating profiling 9 comprises two wave crests and troughs, thus approximately two periods, which are introduced between the bead limbs 8a and 8b into a metal layer 2 made of spring steel.

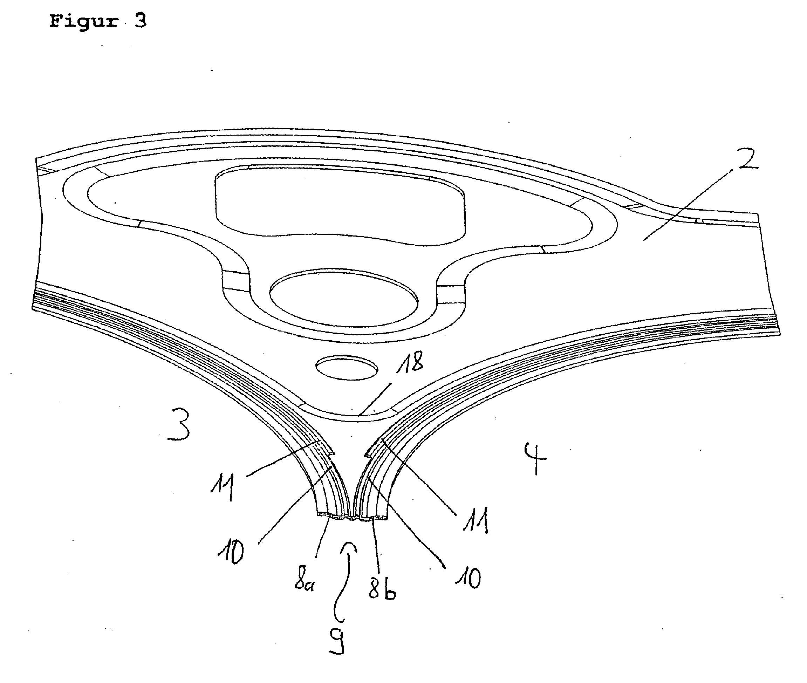

Fig. 3 shows the same metal cylinder head gasket as described in Figs. 1 and 2 but now in a perspective view. From this it can be recognised that the combustion gas openings 3 and 4 are surrounded by the bead limbs 8a, 8b. The complementary bead limbs of the full beads sealing the combustion gas openings outside the web area do not enter the web area but merge, resulting in bead limb 18. Thus a web bead is formed. The undulating profiling is so embodied that parts of the profiling, given the reference numeral 11, are not extended into the web area, whilst other parts of the profiling, given the reference numeral 10, are brought together in the web area. From Fig. 3 it emerges that, to form the bead/stopper combination according to the invention in the web area, only the undulating profilings which are required for a permanently efficient sealing effect of the bead/stopper combination are extended into the web area.

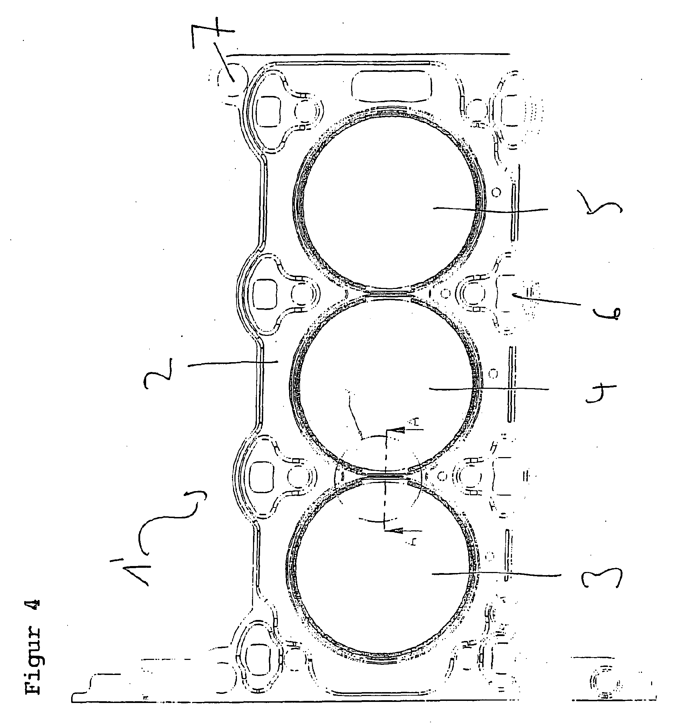

Fig. 4 represents a metal gasket 1' according to the invention through the example of a cylinder head gasket, again with three combustion gas openings 3, 4 and 5. The embodiment of the bead/stopper combination differs from the embodiment represented in Figs. 1 to 4.

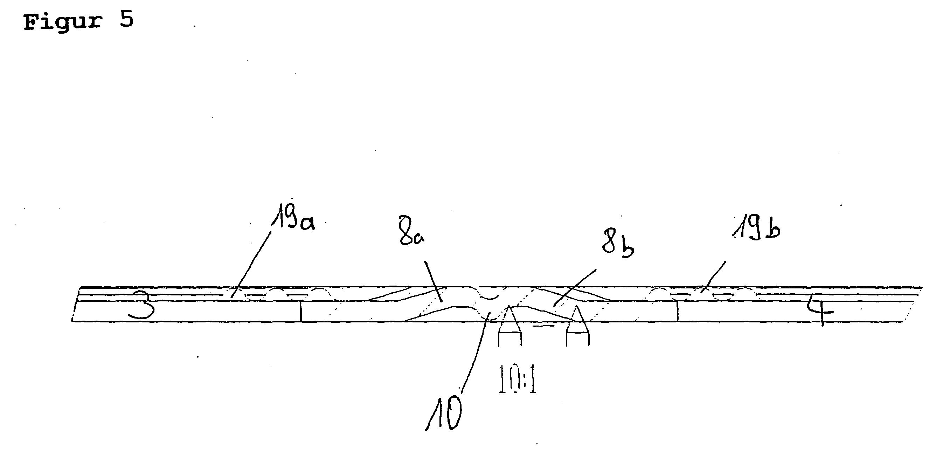

From Fig. 5 it becomes clear that the combustion gas openings are sealed, as in the first exemplary embodiment, with full beads including the bead limbs 8a, 8b and 18, and are also sealed continuously in the web area with web beads having bead limbs 8a and 8b. The profiling is again an undulating one. The profilings 19a, 19b are arranged outside the web area on the side of the beads facing the through openings. In the web area, these profilings 19a, 19b break off; the deformation of the bead is limited in the web area by means of an undulating profiling 10 which is guided between the limbs 8a, 8b of the web bead and which has a complete wave period.

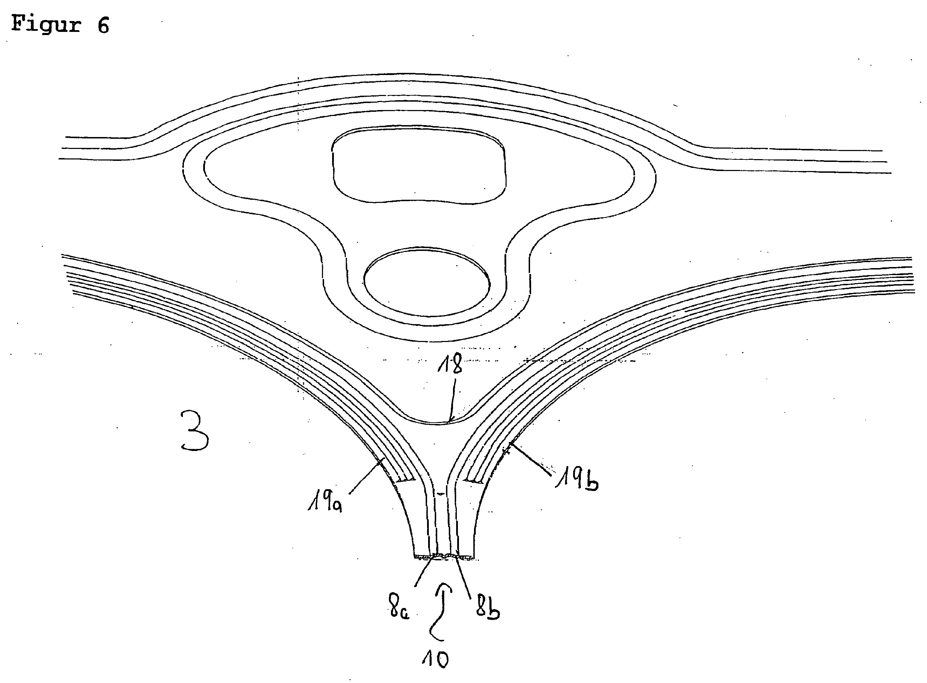

In Fig. 6 is represented a perspective view of the embodiment according to Figs. 4 and 5.

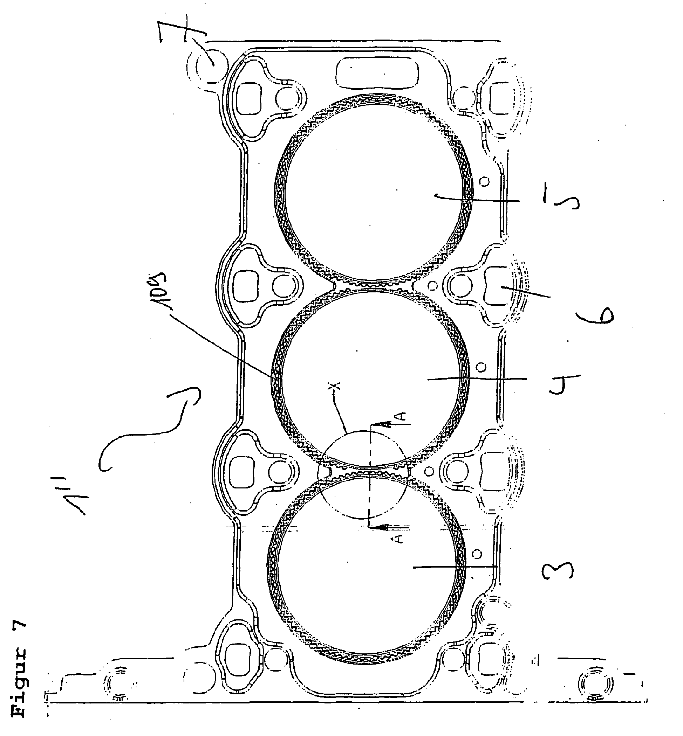

The embodiment of the inventive metal gasket 1'' represented in Fig. 7 corresponds, in respect of the course of the beads and the main arrangement of the profiling acting as a stopper, to the embodiment represented in Figs. 1 to 3. Here, however, a meander-like profiling 109 has been embossed as the stopper.

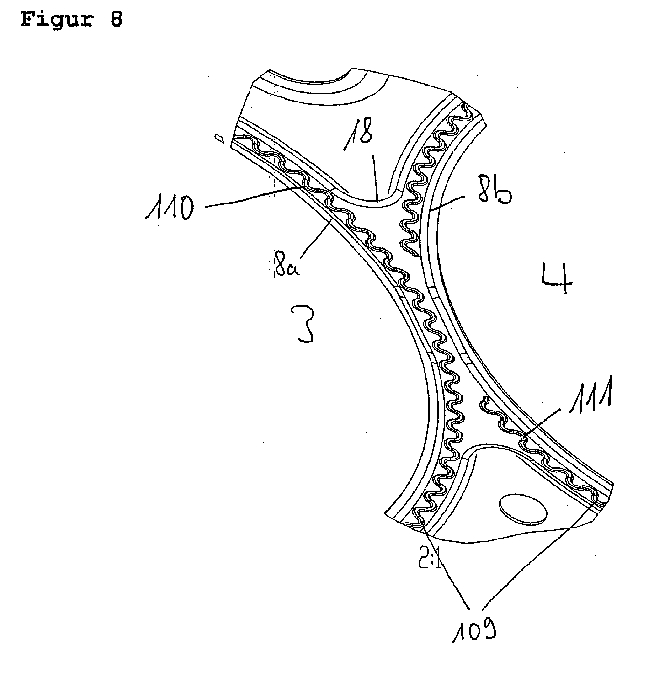

Fig. 8 shows the web area of the metal gasket 1'' of Fig. 7, in a perspective view. The full bead around the through openings 3 and 4 merges in the web area into a web bead having members 8a, 8b, leaving a bead limb 18 continuing outside the web area. The meander-like profiling 109 lies on the side of the bead limbs 8a, 8b which is remote from the combustion gas opening. In the web area, the profiling 111 belonging to one through opening is interrupted whilst the profiling 110 belonging to the adjacent through opening is also led through the web area. Thus a meander-like profiling 110 is led through the web area whilst outside the web area two profilings 110, 111 are present. The number of raised portions of the profiling is reduced in the web area, the profiling shows about half a period of a wave with respect to the plane of the gasket layer and seven consecutive meanders trailing through the web area.

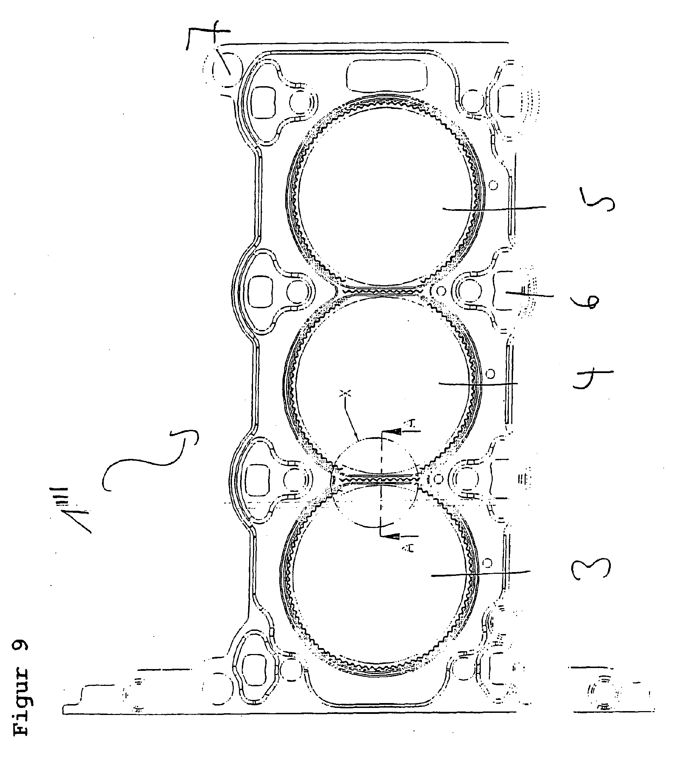

Fig. 9 shows a plan view of a further embodiment of a metal gasket 1''' according to the invention. The arrangement of the beads and of the profiling acting as a stopper corresponds to that of the embodiment of Figs. 4 to 6. The profiling acting as a stopper has been shaped meander-like as in the embodiment of Figs. 7 and 8.

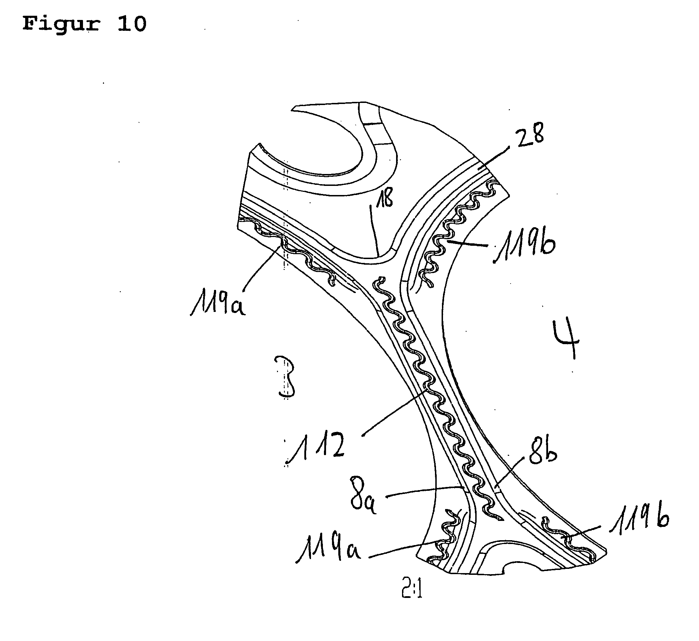

Fig. 10 shows a perspective view of a web area of the metal gasket 1''' represented in Fig. 9. Outside the web area, the combustion gas openings 3 and 4 are directly surrounded by the meander-like profiling 119a, 119b. The profilings 119a and 119b end in the transition area to the web. In the web, their function is taken over by a single profiling 112 which only leads through the web area. A limb of the full bead 28, given the reference numeral 18, leads continuously to the next through opening, whilst the other bead limb 8a forms a web bead together with the bead limb 8b of the adjacent through opening 4. As can be derived from Fig. 10, the transition between the profiling outside the web area and within the web area does not have to be extremely sharp. With respect to the circumference of the combustion chamber gas, the profiling outside the web area and within the web may be simultaneously present for up to 10, preferably up to 5 degrees of the circumference.

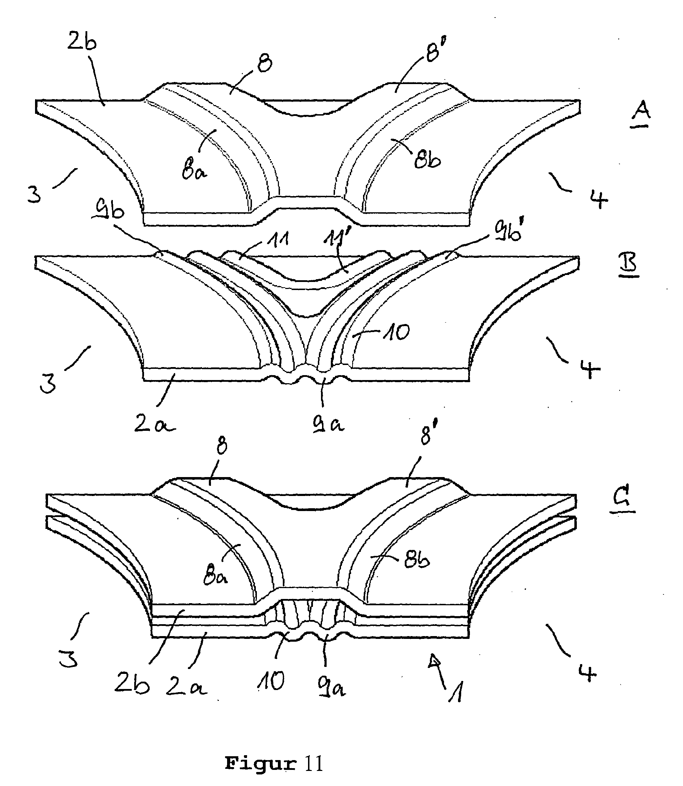

Fig. 11 shows a perspective view of a detail of a gasket according to the invention. The gasket shown in Fig. 11C comprises two layers 2a and 2b, whereas layer 2a is shown separately in Fig. 11B and layer 2b is shown separately in Fig. 11A. Layer 2b comprises two beads 8, 8', each surrounding a combustion hole 3 or 4, respectively.

In the web area between combustion hole 3 and 4, the inner limbs 8a and 8b of beads 8, 8' constitute a web bead. In layer 2b, an undulating profiling forming a stopper for the bead - 8, 8' outside the web area and the web bead combined from bead limbs 8a and 8b in the web area - is arranged. Some part of the undulating profiling, designated with 10, extends into the web area between the bead limbs 8a and 8b, whilst parts of the undulating profiling remote from the combustion gas openings, designated with 11, 11', do not enter the web area but merge with each other thereby constituting a continuous stopper part surrounding the area of the combustion holes 3, 4. The profiling is completely covered by the bead tops including the joint top of the beads 8, 8' and the web bead formed by the bead limbs 8a and 8b.

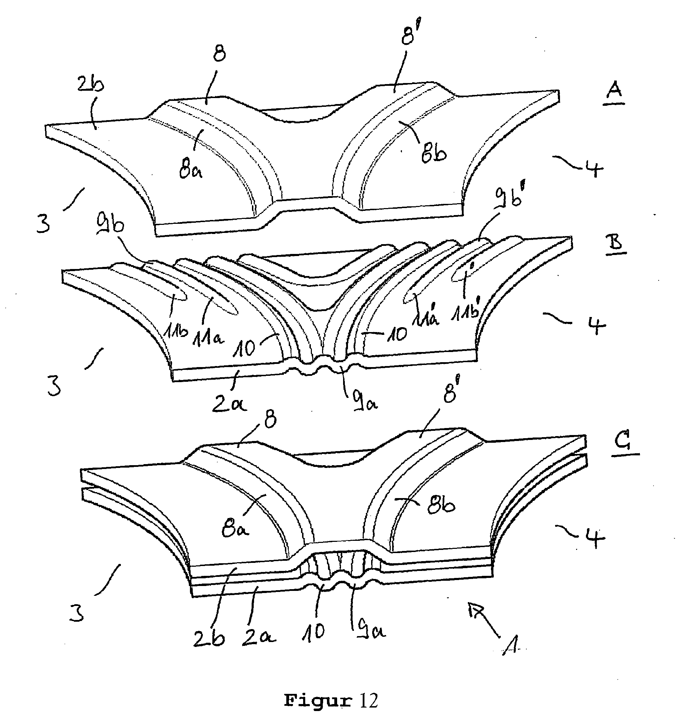

In Fig. 12, a similar arrangement as in Fig. 11 is shown with the difference, that undulating parts 11a, 11a', 11b, 11b' are arranged on that side of the beads 8, 8' which face the combustion holes 3, 4. For reasons of clearness, the undulating parts are depicted in a stretched way in Figures 12B and 12C compared to the representation of the beads in Figures 12A and 12C. Nevertheless, the profiling here again shall be completely covered by the bead tops including their joint top. Again, undulating parts 11a, 11a', 11b, 11b' end before and do not enter into the web area.

## Claims

1. Gasket (1) having at least one metal layer (2) in which at least two through openings (3, 4) are arranged which are each surrounded by at least one bead and which are separated by a web area, the beads surrounding the adjacent through openings being brought together in the web area in such a manner, that at least two bead limbs (8a, 8b) extend through the web area, and at least in sections an undulating or meander-like profiling (10, 11) is arranged in the metal layer containing the beads or in a further layer immediately adjoining the metal layer containing the beads, the profiling in the direction of the plane of the metal layers adjoining the bead(s) and forming a stopper (9) for the bead, **characterised in that** the stopper (9) extends in the web area between the at least two bead limbs (8a, 8b) and **in that** the number of the raised portions of the stopper, formed respectively by the undulating or meander-like profilings (10, 11), is smaller in the web area than the sum of the raised portions of the stopper (9) outside the web area.

2. Gasket according to claim 1, **characterised in that** the beads surrounding the through opening are also adjoined continuously by an undulating or meander-like profiling (10, 11) outside the web area.

3. Gasket according to claim 1 or 2, **characterised in that** the undulating or meander-like profiling (10, 11) is arranged on the side of the respectively at least one bead limb (8a, 8b) remote from the through opening (3, 4), inside and/or outside the web area.

4. Gasket according to claim 1 or 2, **characterised in that** outside the web area the undulating or meander-like profiling (10, 11) is arranged on the side of the respectively at least one bead limb facing the through opening (3, 4).

5. Gasket according to one of the preceding claims, **characterised in that** the bead is a full bead and the undulating or meander-like profiling (10, 11) is formed in the web area between the two full beads.

6. Gasket according to one of claims 1 to 4, **characterised in that** the beads outside the web area are full beads and the undulating or meander-like profiling is formed in the web area between the limbs (8a, 8b) of a web bead.

7. Gasket according to one of claims 1 to 4, **characterised in that** the beads outside the web area are half beads and the undulating or meander-like profiling (10, 11) in the web area is formed between the limbs (8a, 8b) of the two half beads.

8. Gasket according to one of the preceding claims, **characterised in that** the raised portions of the undulating or meander-like profiling (10, 11) are trapezoid.

9. Gasket according to one of the preceding claims, **characterised in that** the profile height, the radii, the width and/or the spacings between the raised portions are different radially or circumferentially inside the undulating and/or meander-like profiling (10, 11).

10. Gasket according to one of the preceding claims, **characterised in that** the width, depth and/or the radius of the meander-like profiling alters in the circumferential direction of the through opening (3, 4).

11. Gasket according to one of the preceding claims, **characterised in that** the flanks of the profilings are partially tapered.

12. Gasket according to one of the preceding claims, **characterised in that** at least the layer (2) in which the undulating or meander-like profiling (10, 11) and/or the beads are formed consists of spring steel.

13. Gasket according to one of claims 1 to 11, **characterised in that** at least the layer (2) in which the undulating or meander-like profiling (10, 11) and/or the beads are formed consists of a cold-forming steel which hardens during tempering.

14. Gasket according to one of the preceding claims, **characterised in that** the web area is a web area between two combustion gas openings (3, 4).

15. Gasket according to one of the preceding claims, **characterised in that** the gasket (1) is a cylinder head gasket.

16. Gasket according to one of the preceding claims, **characterised in that** the gasket (1) is an intake manifold gasket or an exhaust manifold gasket.

17. Gasket according to one of the preceding claims, **characterised in that** the profiling (10, 11) and the bead are arranged in the same layer (2).

18. Gasket according to one of claims 1 to 16, **characterised in that** the profiling (10, 11) and the bead are arranged in adjoining layers.

## Patentansprüche

1. Dichtung (1) mit mindestens einer Metalllage (2), in der mindestens zwei Durchgangsöffnungen (3, 4) angeordnet sind, die jeweils von mindestens einer Sicke umgeben und durch einen Stegbereich getrennt sind, wobei die die benachbarten Durchgangsöffnungen umgebenden Sicken im Stegbereich so zusammengeführt sind, dass durch den Stegbereich mindestens zwei Sickenschenkel (8a, 8b) verlaufen, und wobei zumindest abschnittsweise eine wellen- oder mäanderförmige Profilierung (10, 11) in der die Sicken enthaltenden Metalllage oder in einer weiteren unmittelbar zu der die Sicken enthaltenden Metalllage benachbarten weiteren Lage angeordnet ist, wobei die Profilierung in Richtung der Ebene der Metalllagen zu der Sicke (den Sicken) benachbart ist und einen Stopper (9) für die Sicke bildet,
**dadurch gekennzeichnet, dass**
der Stopper (9) im Stegbereich zwischen den mindestens zwei Sickenschenkeln (8a, 8b) verläuft und die Anzahl der jeweils durch die wellen- oder mäanderförmigen Profilierungen gebildeten Erhebungen des Stoppers im Stegbereich kleiner ist als die Summe der Erhebungen des Stoppers (9) außerhalb des Stegbereichs.

2. Dichtung nach Anspruch 1,
**dadurch gekennzeichnet, dass**
die die Durchgangsöffnung umgebenden Sicken auch außerhalb des Stegbereichs fortlaufend von einer wellen- oder mäanderförmigen Profilierung (10, 11) benachbart sind.

3. Dichtung nach Anspruch 1 oder 2,
**dadurch gekennzeichnet, dass**
die wellen- oder mäanderförmige Profilierung (10, 11) auf der der Durchgangsöffnung (3, 4) abgewandten Seite des jeweils mindestens einen Sickenschenkels (8a, 8b), innerhalb oder außerhalb des Stegbereichs angeordnet ist.

4. Dichtung nach Anspruch 1 oder 2,
**dadurch gekennzeichnet, dass**
die wellen- oder mäanderförmige Profilierung (10, 11) außerhalb des Stegbereichs auf der der Durchgangsöffnung (3, 4) zugewandten Seite des jeweils mindestens einen Sickenschenkels angeordnet ist.

5. Dichtung nach einem der vorangehenden Ansprüche,
**dadurch gekennzeichnet, dass**
die Sicke eine Vollsicke ist und die wellen- oder mäanderförmige Profilierung (10, 11) im Stegbereich zwischen den beiden Vollsicken ausgebildet ist.

6. Dichtung nach einem der Ansprüche 1 bis 4,
**dadurch gekennzeichnet, dass**
die Sicken außerhalb des Stegbereichs Vollsicken sind und die wellen- oder mäanderförmige Profilierung im Stegbereich zwischen den Sickenschenkeln (8a, 8b) einer Stegsicke ausgebildet ist.

7. Dichtung nach einem der Ansprüche 1 bis 4,
**dadurch gekennzeichnet, dass**
die Sicken außerhalb des Stegbereichs Halbsicken sind und die wellen- oder mäanderförmige Profilierung (10, 11) im Stegbereich zwischen den Schenkeln (8a, 8b) der zwei Halbsicken ausgebildet ist.

8. Dichtung nach einem der vorangehenden Ansprüche,
**dadurch gekennzeichnet, dass**
die Erhebungen der wellen- oder mäanderförmigen Profilierung (10, 11) Trapezform aufweisen.

9. Dichtung nach einem der vorangehenden Ansprüche,
**dadurch gekennzeichnet, dass**
die Profilhöhe, die Breite und/oder die Abstände zwischen den Erhebungen innerhalb der wellen- und/oder mäanderförmigen Profilierung (10, 11) radial oder umlaufend unterschiedlich sind.

10. Dichtung nach einem der vorangehenden Ansprüche,
**dadurch gekennzeichnet, dass**
die Breite, Tiefe und/oder der Radius der mäanderförmigen Profilierung in Umlaufrichtung der Durchgangsöffnung (3, 4) sich ändert.

11. Dichtung nach einem der vorangehenden Ansprüche,
**dadurch gekennzeichnet, dass**
die Flanken der Profilierungen teilweise verjüngt sind.

12. Dichtung nach einem der vorangehenden Ansprüche,
**dadurch gekennzeichnet, dass**
zumindest die Lage (2), in der die wellen- oder mäanderförmige Profilierung (10, 11) und die Sicken ausgebildet sind, aus Federstahl besteht.

13. Dichtung nach einem der Ansprüche 1 bis 11,
**dadurch gekennzeichnet, dass**
zumindest die Lage (2), in der die wellen- oder mäanderförmige Profilierung (10, 11) und/oder die Sicken ausgebildet sind, aus einem kalt verformbaren, bei Temperung aushärtenden Stahl besteht.

14. Dichtung nach einem der vorangehenden Ansprüche,
**dadurch gekennzeichnet, dass**
der Stegbereich ein Stegbereich zwischen zwei Brenngasdurchgangsöffnungen (3, 4) ist.

15. Dichtung nach einem der vorangehenden Ansprüche,
**dadurch gekennzeichnet, dass**
die Dichtung (1) eine Zylinderkopfdichtung ist.

16. Dichtung nach einem der vorangehenden Ansprüche,
**dadurch gekennzeichnet, dass**
die Dichtung (1) eine Ansaugkrümmerdichtung oder eine Auspuffkrümmerdichtung ist.

17. Dichtung nach einem der vorhergehenden Ansprüche,
**dadurch gekennzeichnet, dass**
die Profilierung (10, 11) und die Sicke in derselben Lage (2) angeordnet sind.

18. Dichtung nach einem der Ansprüche 1 bis 16,
**dadurch gekennzeichnet, dass**
die Profilierung (10, 11) und die Sicke in verschiedenen Lagen angeordnet sind.

## Revendications

1. Joint d'étanchéité (1) comportant au moins une couche métallique (2) dans lequel au moins deux ouvertures traversantes (3, 4) sont agencées, lesquelles sont chacune entourées par au moins une nervure et qui sont séparées par une zone de bande, les nervures entourant les ouvertures traversantes adjacentes étant rassemblées dans la zone de bande de telle manière qu'au moins deux bras de nervure (8a, 8b) s'étendent à travers la zone de bande, et au moins dans certaines sections, un profil onduleux ou du type serpentin (10, 11) est agencé dans la couche métallique contenant les nervures ou dans une autre couche immédiatement adjacente à la couche métallique contenant les nervures, le profil, dans la direction du plan des couches métalliques étant adjacent aux nervures et formant un élément d'arrêt (9) pour la nervure, **caractérisé en ce que** l'élément d'arrêt (9) s'étend dans la zone de bande entre les au moins deux bras de nervure (8a, 8b) et **en ce que** le nombre des parties surélevées de l'élément d'arrêt, formées respectivement par les profils onduleux ou du type serpentin (10, 11), est plus faible dans la zone de bande que la somme des parties surélevées de l'élément d'arrêt (9) à l'extérieur de la zone de bande.

2. Joint d'étanchéité selon la revendication 1, **caractérisé en ce que** les nervures entourant l'ouverture traversante sont aussi reliées de manière continue par un profil onduleux ou du type serpentin (10, 11) à l'extérieur de la zone de bande.

3. Joint d'étanchéité selon la revendication 1 ou 2, **caractérisé en ce que** le profil onduleux ou du type serpentin (10, 11) est agencé sur le côté du au moins un bras de nervure (8a, 8b) respectif distant de l'ouverture traversante (3, 4), à l'intérieur et/ou à l'extérieur de la zone de bande.

4. Joint d'étanchéité selon la revendication 1 ou 2, **caractérisé en ce que**, à l'extérieur de la zone de bande le profil onduleux ou du type serpentin (10, 11) est agencé sur le côté du au moins un bras de nervure respectif faisant face à l'ouverture traversante (3, 4).

5. Joint d'étanchéité selon l'une des revendications précédentes, **caractérisé en ce que** la nervure est une nervure pleine et le profil onduleux ou du type serpentin (10, 11) est formé dans la zone de bande entre les deux nervures pleines.

6. Joint d'étanchéité selon l'une des revendications 1 à 4, **caractérisé en ce que** les nervures externes à la zone de bande sont des nervures pleines et le profil onduleux ou du type serpentin est formé dans la zone de bande entre les bras (8a, 8b) d'une nervure de bande.

7. Joint d'étanchéité selon l'une des revendications 1 à 4, **caractérisé en ce que** les nervures externes à la zone de bande sont des demi-nervures et le profil onduleux ou du type serpentin (10, 11) dans la zone de bande est formé entre les bras (8a, 8b) des deux demi-nervures.

8. Joint d'étanchéité selon l'une des revendications précédentes, **caractérisé en ce que** les parties surélevées du profil onduleux ou du type serpentin (10, 11) sont trapézoïdales.

9. Joint d'étanchéité selon l'une des revendications précédentes, **caractérisé en ce que** la hauteur de profil, le rayon, la largeur et/ou les espacements entre les parties surélevées sont différents radialement ou circonférentiellement à l'intérieur du profil onduleux et/ou du type serpentin (10, 11).

10. Joint d'étanchéité selon l'une des revendications précédentes, **caractérisé en ce que** la largeur, la profondeur et/ou le rayon du profil du type serpentin altère la direction circonférentielle de l'ouverture traversante (3, 4).

11. Joint d'étanchéité selon l'une des revendications précédentes, **caractérisé en ce que** les flancs des profils sont partiellement coniques.

12. Joint d'étanchéité selon l'une des revendications précédentes, **caractérisé en ce qu'**au moins la couche (2) dans laquelle le profil onduleux ou du type serpentin (10, 11) et/ou les nervures sont formés, est réalisée en un acier à ressort.

13. Joint d'étanchéité selon l'une des revendications 1 à 11, **caractérisé en ce qu'**au moins la couche (2) dans laquelle le profil onduleux ou du type serpentin (10, 11) et/ou les nervures sont formés, est réalisée en un acier de formation à froid qui durcit au cours de la trempe.

14. Joint d'étanchéité selon l'une des revendications précédentes, **caractérisé en ce que** la zone de bande est une zone de bande entre deux orifices de gaz de combustion (3, 4).

15. Joint d'étanchéité selon l'une des revendications précédentes, **caractérisé en ce que** le joint d'étanchéité (1) est un joint de culasse.

16. Joint d'étanchéité selon l'une des revendications précédentes, **caractérisé en ce que** le joint d'étanchéité (1) est joint de collecteur d'admission ou un joint de collecteur d'échappement.

17. Joint d'étanchéité selon l'une des revendications précédentes, **caractérisé en ce que** le profil (10, 11) et la nervure sont agencés dans la même couche (2).

18. Joint d'étanchéité selon l'une des revendications 1 à 16, **caractérisé en ce que** le profil (10, 11) et la nervure sont agencés dans des couches adjacentes.
